Europäisches Patentamt

European Patent Office

Office européen des brevets

(19)

(11) **EP 0 582 342 B1**

(12) **EUROPEAN PATENT SPECIFICATION**

(45) Date of publication and mention
of the grant of the patent:
**19.11.1997 Bulletin 1997/47**

(51) Int Cl.⁶: **G11B 5/39**

(21) Application number: **93202240.3**

(22) Date of filing: **29.07.1993**

(54) **Magnetic head having a multilayer structure and method of manufacturing the magnetic head**

Magnetkopf mit einer Mehrschichtstruktur und Verfahren zum Herstellen des Magnetkopfes

Tête magnétique ayant une structure à couches multiples et procédé de fabrication de la tête magnétique

(84) Designated Contracting States:
**DE FR GB IT**

(30) Priority: **06.08.1992 EP 92202435**

(43) Date of publication of application:
**09.02.1994 Bulletin 1994/06**

(73) Proprietor: **Philips Electronics N.V.
5621 BA Eindhoven (NL)**

(72) Inventor: **Postma, Lambertus,
c/o INT. OCTROOIBUREAU B.V.
NL-5656 AA Eindhoven (NL)**

(74) Representative:
**Schrijnemaekers, Hubert Joannes Maria et al
INTERNATIONAAL OCTROOIBUREAU B.V.,
Prof. Holstlaan 6
5656 AA Eindhoven (NL)**

(56) References cited:
**EP-A- 0 375 646      EP-A- 0 534 791
EP-A- 0 551 603      GB-A- 2 146 482**

- **PATENT ABSTRACTS OF JAPAN vol. 11, no. 362
  (P-640)(2809) 26 November 1987 & JP-A-62 137
  713 (VICTOR CO OF JAPAN LTD) 20 June 1987**
- **IBM TECHNICAL DISCLOSURE BULLETIN vol.
  20, no. 2 , July 1977 , ARMONK, N. Y., US pages
  791 - 793 L. T. ROMANKIW**

## Description

The invention relates to a magnetic head for detecting a magnetic field representing information on a magnetic recording medium, said magnetic head having a head face and comprising a multilayer structure with at least one magnetoresistive layer of magnetic anisotropic material, said magnetoresistive layer forming a magnetoresistive element located between two end portions with a longitudinal axis directed from one end portion to the other end portion, said magnetoresistive element having a easy axis of magnetization extending at least substantially parallel to the longitudinal axis and being provided at one side with a layer comprising at least one equipotential strip which extends at an angle to the longitudinal axis.

A magnetic head of this type is known from US-A 4,052,748.

The known magnetic head comprises a elongate magnetoresistive element of magnetic anisotropic material which has an easy axis of magnetization extending in the longitudinal direction of the element and a defined direction of magnetization extending at least substantially parallel to the easy axis of magnetization. Contacts for connecting the magnetoresistive element to a current or voltage source are provided at two end portions arranged opposite each other. The magnetoresistive element has satisfactorily conducting equipotential strips which are arranged at a minimum angle of 30° and a maximum angle of 60° with respect to the longitudinal axis of the magnetoresistive element. During operation the equipotential strips force an electric measuring current applied to the magnetoresistive element to flow through the element at an angle with respect to the easy axis of magnetization, while a longitudinal bias is generated. In practice said angle is approximately 45°. Under the influence of a magnetic field comprising information of a record carrier moving along the magnetic head the resistance of each part, located between the equipotential strips, of the magnetoresistive element decreases or increases, dependent on whether the direction of magnetization coincides with the current direction in the magnetoresistive element to a greater or lesser degree. Consequently, a linear reproduction by means of a non-biased magnetoresistive head is principally possible. To improve the linearity of the behaviour of the magnetoresistive element, an auxiliary field may be applied.

It has been found that due to external influences such as, for example the presence of an external magnet or exposure to high temperatures, the adjusted direction of magnetization of the magnetoresistive element may be disturbed so that the operation of the magnetic head deteriorates. It has also been found that at small measuring currents the longitudinal bias due to the presence of equipotential strips is too low to prevent Barkhausen noise.

It is an object of the invention to provide a magnetic head of the type described in the opening paragraph which comprises a stable magnetoresistive element which is insensitive to external influences and does not produce any Barkhausen noise, also at a small measuring current.

To this end the magnetic head according to the invention is characterized in that opposite each end portion, at a side of the magnetoresistive element remote from the layer comprising at least one equipotential strip, the multilayer structure comprises a layer of hardmagnetic material having an axis of magnetization extending parallel to the longitudinal axis of the magnetoresistive element, a non-magnetic spacer layer of electrically insulating material being present between each end portion and the facing layer of hard-magnetic material.

The layers of hard-magnetic material being present exclusively opposite to, and spaced apart from the end portions are magnetostatically coupled to the magnetoresistive element. The longitudinal field consequently present in the magnetoresistive element inhibits the movement of domain walls which may be particularly present proximate to the end portions of the magnetoresistive layer and maintains the adjusted direction of magnetization of the magnetoresistive element.

The magnetic head according to the invention does not impose any particular technological requirements. This means that the magnetic head can be manufactured by means of a limited number of relatively simple process steps.

It has been found by experiment that a alloy of cobalt-platinum is eminently suitable as a hard-magnetic material. The coercive force $H_c$ of the hard-magnetic material should have a minimum value of 37788 A/m (500 Oe) in connection with the magnitude of the magnetic field strength of the usually occurring interference fields and is preferably between 37788 A/m (500) and 75577 A/m (1000 Oe). An oxide, preferably $Al_2O_3$ or $SiO_2$ may be used as a material for the non-magnetic, electrically insulating spacer layer.

An embodiment of the magnetic head according to the invention is characterized in that hard-magnetic material is enclosed between two non-magnetic layers, one of which is the spacer layer. The other layer is of particular importance if the multilayer structure is provided on a magnetic substrate. The non-magnetic layer may be an oxide, preferably $SiO_2$ or $Al_2O_3$.

An embodiment in which the multilayer structure is present on a magnetic or non-magnetic substrate is characterized in that, viewed from the substrate, the multilayer structure successively comprises a non-magnetic layer, a layer of hard-magnetic material, a spacer layer, the magnetoresistive layer and the layer comprising at least one equipotential strip. This practical embodiment has eminent properties and can be manufactured in a relatively simple manner. The non-magnetic layer may be an oxide, preferably $SiO_2$ or $Al_2O_3$.

An embodiment which is attractive from a technological point of view is characterized in that the layer comprising at least one equipotential strip is provided with electrically conducting connection tracks each extending from an end portion. Together with the end portions of the magnetoresistive layer the connection tracks establish electric contact and are provided with contacts for connection to a current or voltage source. The connection tracks and equipotential strip or strips provided in one and the same processing step during manufacture are preferably formed by means of a layer of Au which, for technological reasons, preferably extends between two thin layers of Mo.

It is to be noted that it is known *per se* from US-A 5,005,096 (EP-A-0.375 646) to provide hard-magnetic layers opposite end portions of a magnetoresistive layer, which layers are magnetostatically coupled to the magnetoresistive layer. However, as compared with the magnetic head according to the invention, the thin-film magnetic head known from US-A 5,005,096 is of a different type and has a completely different structure. A magnetoresistive sensor without equipotential strip or strips is arranged between said end portions. Instead of equipotential strips, the known magnetic head has a soft-magnetic layer extending underneath and parallel to the magnetoresistive layer and separated therefrom by a nonmagnetic layer. The soft-magnetic layer generates a transversal bias field in the magnetoresistive sensor for linearizing the sensor. Non-magnetic spacer layers of electrically conducting material, *viz* Cr, W, Nb or Ta are present between the hard-magnetic layers extending above the magnetoresistive layer and said end portions. The hard-magnetic layers also serve as electric conductors between electrically conducting connection tracks provided on the hard-magnetic layers and the electrically conducting spacer layers. Consequently, the connection tracks are electrically connected to the magnetoresistive layer *via* the hard-magnetic layers and the spacer layers.

It is also to be noted that a thin-film magnetic head of yet another type is known from US-A 4,639,806 (GB-A-2.146.482), in which hard-magnetic thin layers are directly provided on end portions of a ferromagnetic thin film (MR element). The MR element is coupled in exchange with the hard-magnetic thin layers. The hard-magnetic thin layers are provided with electric conductors which are electrically connected to the MR element *via* the hard-magnetic thin layers.

The invention also relates to a method of manufacturing a magnetic head according to the invention.

The method according to the invention is characterized in that a non-magnetic layer, at least one layer of a hard-magnetic material, a non-magnetic, electrically insulating spacer layer, a magnetoresistive layer and a layer forming at least one equipotential strip are successively structured. With this method a reliable magnetic head provided with a stable magnetoresistive element can be manufactured in a limited number of process steps.

These and other aspects of the invention will be apparent from and elucidated with reference to the embodiments described hereinafter. In the drawings

Fig. 1 is a diagrammatic cross-section of an embodiment of the magnetic head according to the invention,
Fig. 2 is a diagrammatic cross-section taken on the line II-II of the magnetic head of Fig. 1 and
Fig. 3 is a diagrammatic cross-section taken on the line III-III of the magnetic head.

In this embodiment the thin-film magnetic head according to the invention shown in the Figures comprises a substrate 1 of a non-magnetic material, for example $Al_2O_3$.TiC on which a multilayer structure and a counterblock 3 of a non-magnetic material, for example $Al_2O_3$.TiC are provided. The magnetic head has a head face 5 for guiding a magnetic recording medium 7, particularly a magnetic tape, in a direction x.

The multilayer structure which extends between the substrate 1 and the counterblock 3 comprises a magnetoresistive layer 9 of a magnetic anisotropic material, for example Ni-Fe which forms an elongate magnetoresistive element 11 between two end portions 9a and 9b with a longitudinal axis 11a extending from one end portion to the other. The magnetoresistive element 11, briefly referred to as MR element, has an easy axis of magnetization denoted by $M_1$ extending parallel to the longitudinal axis 11a. The direction of magnetization is indicated by the vector $\overline{M}$. A layer 13a of, for example Au comprising a plurality of equipotential strips 13 is provided at one side 11b of the element 11. The equipotential strips extend at an angle of 45° to the longitudinal axis 11a. The electrically conducting layer 13a has two connection tracks 13a1 and 13a2 to which a current or voltage source is connectable. A small measuring current of 5 to 10 mA is used during operation.

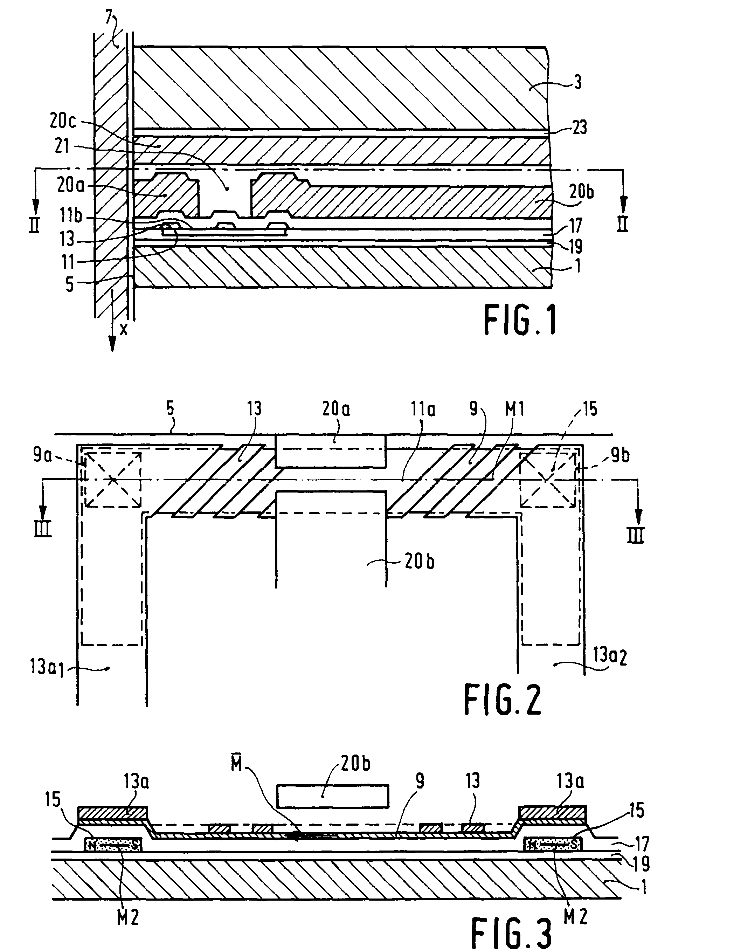

The multilayer structure also comprises a layer 15 of a hard-magnetic material, for example Co-Pt located opposite to, and spaced apart from the end portions 9a and 9b. The layers 15 located at a side 11b of the MR element remote from the layer comprising the equipotential strips have an axis of magnetization $M_2$ extending parallel to the longitudinal axis 11a and are permanently magnetized, as is shown in Fig. 3 by means of the letters N (northpole) and S (southpole). Consequently, the direction of magnetization of the layers 15 corresponds to the adjusted direction of magnetization $\overline{M}$ of the MR element 11. A non-magnetic spacer layer 17 of electrically insulating material, for example $SiO_2$ is present between the hard-magnetic layers 15 and the magnetoresistive layer 9. A non-magnetic layer 19 of, for example $Al_2O_3$ or $SiO_2$ is present between the substrate 1 and the hard-magnetic layers 15. The multilayer structure further comprises a pair of flux guides of a soft-magnetic material, for example NiFe or AlFeSi comprising a first flux guide 20a adjacent to the head face 5 and, spaced apart therefrom, a second flux guide 20b. A space 21 present between the two flux guides is bridged by the MR element 11, the first flux guide 20a being used for directing a magnetic field comprising information from the magnetic medium 7 to an MR element 11. Insulating material, for example SiO$_2$ is provided in the space 21, between the MR element 11 and the flux guides 20a and 20b and between the flux guides 20a and 20b and a third flux guide 20c.

The magnetic head according to the invention can be realised in a limited number of process steps. The method according to the invention starts from the substrate 1 on which the non-magnetic layer 19, the two layers 15 of hard-magnetic material, the spacer layer 17, the magnetoresistive layer 9 and the layer 13a forming the equipotential strips 13 are successively provided. After a insulation layer has been provided, the flux guides 20a, 20b and 20c can be provided with an adhesive layer 23 and finally the counterblock 3 is provided. The layers forming part of the multilayer structure may be provided and structured by means of known thin-film techniques. Use can be made of, for example vapour deposition or sputtering. Lithographic methods may also be used. After the counterblock 3 has been provided, the head face 5 can be formed, for example by grinding and polishing.

It is to be noted that the invention is not limited to the embodiment shown. For example, the magnetic head according to the invention may be provided, for example with a plurality of MR elements arranged adjacent to each other with respect to the substrate for simultaneously scanning several magnetic tracks present on a magnetic recording medium. Instead of said alloy of cobalt-platinum, other hard-magnetic materials may be alternatively used. The measures according to the invention may of course also be used in a magnetic head comprising a magnetic substrate of, for example NiZn ferrite.

**Claims**

1. A magnetic head for detecting a magnetic field representing information on a magnetic recording medium, said magnetic head having a head face (5) and comprising a multilayer structure with at least one magnetoresistive layer (9) of magnetic anisotropic material, said magnetoresistive layer (9) forming a magnetoresistive element (11) located between two end portions (9a,9b) with a longitudinal axis (11a) directed from one end portion to the other end portion, said magnetoresistive element (11) having an easy axis of magnetization extending at least substantially parallel to the longitudinal axis and being provided at one side (11b) with a layer comprising at least one equipotential strip (13) which extends at an angle to said longitudinal axis, characterized in that opposite each end portion (9a,9b), at a side of the magnetoresistive element remote from the layer comprising at least one equipotential strip (13), the multilayer structure comprises a layer of hard-magnetic material (15) having an axis of magnetization extending parallel to said longitudinal axis (11a) of the magnetoresistive element, a non-magnetic spacer layer (17) of electrically insulating material being present between each end portion (9a,9b) and the facing layer of hard-magnetic material (15).

2. A magnetic head as claimed in Claim 1, characterized in that the hardmagnetic material (15) is substantially an alloy of cobalt-platinum.

3. A magnetic head as claimed in Claim 1 or 2, characterized in that the non-magnetic spacer layer (17) comprises substantially Al$_2$O$_3$ or SiO$_2$.

4. A magnetic head as claimed in Claim 1, 2 or 3, characterized in that the hard-magnetic material (15) is enclosed between two non-magnetic layers (17,19), one of which is the spacer layer (17).

5. A magnetic head as claimed in Claim 1, 2 or 3, in which the multilayer structure is present on a substrate (1), characterized in that, viewed from the substrate, the multilayer structure successively comprises a non-magnetic layer (19), a layer of hard-magnetic material (15), a spacer layer (17), the magnetoresistive layer (9) and the layer comprising at least one equipotential strip (13).

6. A magnetic head as claimed in Claim 1, 2, 3, 4 or 5, characterized in that the layer comprising at least one equipotential strip (13) is provided with electrically conducting connection tracks (13a,13b) each extending from an end portion (9a,9b) of said magnetoresistive layer (9).

7. A method of manufacturing the magnetic head as claimed in Claim 5, or as claimed in Claims 5 and 6, characterized in that a non-magnetic layer (19), at least one layer of a hard-magnetic material (15), a non-magnetic, electrically insulating spacer layer (17), a magnetoresistive layer (9) and a layer forming at least one equipotential strip (13) are successively structured.

**Patentansprüche**

1. Magnetkopf zum Detektieren eines Information darstellenden Magnetfeldes auf einem magnetischen Aufzeichnungsmedium, wobei dieser Magnetkopf mit einer Kopffläche (5) und einer Mehrschichtstruktur mit mindestens einer magnetoresistiven Schicht (9) aus magnetisch anisotropem Material versehen ist, wobei diese magnetoresistive Schicht (9) ein zwischen zwei Endteilen (9a, 9b) liegendes magnetoresistives Element (11) mit einer sich von dem einen Endteil zu dem anderen Endteil erstreckenden Längsachse (11a) bildet, wobei dieses magnetoresistive Element (11) eine sich wenigstens nahezu parallel zu der Längsachse erstreckende Achse leichter Magnetisierung hat und auf einer Seite (11b) mit mindestens einer einen Äquipotentialstreifen (13) umfassenden Schicht versehen ist, wobei dieser Äquipotentialstreifen mit der genannten Längsachse einen Winkel einschließt, dadurch gekennzeichnet, daß die Mehrschichtstruktur gegenüber jedem der Endteile (9a, 9b) auf einer von der wenigstens einen Äquipotentialstreifen (13) umfassenden Schicht abgewandten Seite des magnetoresistiven Elementes eine Schicht aus einem hart-magnetischen Material (15) mit einer sich parallel zu der genannten Längsachse (11a) des magnetoresistiven Elementes ertreckenden Magnetisierungsachse umfaßt, wobei sich zwischen jedem Endteil (9a, 9b) und der gegenüberliegenden Schicht aus hartmagnetischem Material (15) eine nicht-magnetische Distanzschicht (17) aus isolierendem Material befindet.

2. Magnetkopf nach Anspruch 1, dadurch gekennzeichnet, daß das hart-magnetische Material (15) im wesentlichen eine Kobalt-Platinlegierung ist.

3. Magnetkopf nach Anspruch 1 oder 2, dadurch gekennzeichnet, daß die nicht-magnetische Distanzschicht (17) im wesentlichen $Al_2O_3$ oder $SiO_2$ enthält.

4. Magnetkopf nach Anspruch 1, 2 oder 3, dadurch gekennzeichnet, daß das hart-magnetische Material (15) zwischen zwei nicht-magnetischen Schichten (17, 19) vorgesehen ist, wobei eine derselben die Distanzschicht (17) ist.

5. Magnetkopf nach Anspruch 1, 2 oder 3, wobei die Mehrschichtstruktur auf einem Substrat (1) vorhanden ist, dadurch gekennzeichnet, daß die Mehrschichtstruktur, von dem Substrat aus gesehen, nacheinader eine nicht-magnetsiche Schicht (19), eine Schicht aus einem hart-magnetischen Material (15), eine Distanzschicht (17), die magnetoresistive Schicht (9) und die wenigstens einen Äquipotentialstreifen (13) enthaltende Schicht aufweist.

6. Magnetkopf nach Anspruch 1, 2, 3, 4, oder 5, dadurch gekennzeichnet, daß die wenigstens einen Äquipotentialstreifen (13) aufweisende Schicht mit elektrisch leitenden Verbindungsspuren (13a, 13b) versehen ist, die sich je von einem Endteil (9a, 9b) der genannten magnetoresistiven Schichten (9) erstrecken.

7. Verfahren zum Herstellen des Magnetkopfes nach Anspruch 5, oder nach Anspruch 5 und 6, dadurch gekennzeichnet, daß nacheinander eine nicht-magnetische Schicht (19), wenigstens eine Schicht aus einem hart-magnetischen Material (15), eine nicht-magnetische, elektrisch isolierende Distanzschicht (17), eine magnetoresistive Schicht (9) und eine wenigstens einen Äquipotentialstreifen bildende Schicht strukturiert werden.

## Revendications

1. Tête magnétique pour détecter un champ magnétique représentant de l'information sur un milieu d'enregistrement magnétique, ladite tête magnétique présentant une face de tête (5) et comportant une structure à couches multiples présentant au moins une couche magnétorésistive en matériau anisotrope magnétique (9), ladite couche magnétorésistive (9) constituant un élément magnétorésistif (11) situé entre deux parties terminales (9a, 9b) présentant un axe longitudinal (11a) dirigé d'une partie terminale vers l'autre partie terminale, ledit élément magnétorésistif (11) présentant un axe de magnétisation facile s'étendant au moins sensiblement en parallèle à l'axe longitudinal et étant muni à un côté (11b) d'une couche comportant au moins une bande equipotentielle (13) qui forme un angle avec ledit axe longitudinal, caractérisée en ce qu'à l'opposé de chaque partie terminale (9a, 9b), à un côté de l'élément magnétorésistif éloigné de la couche comportant au moins une bande équipotentielle (13), la structure à couches multiples comporte une couche en matériau magnétique dur (15) présentant un axe de magnétisation s'étendant en parallèle audit axe longitudinal (11a) de l'élément magnétorésistif, une couche d'espacement non magnétique en matériau électriquement isolant (17) se situant entre chaque partie terminale (9a, 9b) et la couche en matériau magnétique dur (15) y faisant face.

2. Tête magnétique selon la revendication 1, caractérisée en ce que le matériau magnétique dur (15) est sensiblement un alliage de cobalt et de platine.

3. Tête magnétique selon la revendication 1 ou 2, caractérisée en ce que la couche d'espacement non magnétique (17) comporte sensiblement $Al_2O_3$ ou $SiO_2$.

4. Tête magnétique selon la revendication 1, 2 ou 3, caractérisée en ce que le matériau magnétique dur (15) est renfermé entre deux couches non magnétiques (17, 19) dont l'une est la couche d'espacement (17).

5. Tête magnétique selon la revendication 1, 2 ou 3, dans laquelle la structure à couches multiples se situe sur un substrat (1), caractérisée en ce que, vu du substrat, la structure à couches multiples comporte successivement une couche non magnétique (19), une couche en matériau magnétique dur (15), une couche d'espacement (17), la couche magnétorésistive (9) et la couche comportant au moins une bande équipotentielle (13).

6. Tête magnétique selon la revendication 1, 2, 3, 4 ou 5, caractérisée en ce que la couche comportant au moins une bande équipotentielle (13) est munie de pistes de connexion électriquement conductrices (13a, 13b) chacune s'étendant à partir d'une partie terminale (9a, 9b) de ladite couche magnétorésistive (9).

7. Procédé pour fabriquer la tête magnétique selon la revendication 5 ou selon les revendications 5 et 6, caractérisé en ce qu'il est structuré successivement une couche non magnétique (19), au moins une couche en matériau magnétique dur (15), une couche d'espacement électriquement isolante non magnétique (17), une couche magnétorésistive (9) et une couche constituant au moins une bande équipotentielle (13).

FIG.1

FIG.2

FIG.3